(19) Europäisches Patentamt

European Patent Office

Office européen des brevets

(11) **EP 0 767 095 A1**

(12) **EUROPEAN PATENT APPLICATION**
published in accordance with Art. 158(3) EPC

(43) Date of publication:
09.04.1997 Bulletin 1997/15

(21) Application number: 94910501.9

(22) Date of filing: 08.04.1994

(51) Int. Cl.[6]: **B61B 13/04**, E01B 5/08, E01B 25/00

(86) International application number:
PCT/IB94/00065

(87) International publication number:
WO 95/27643 (19.10.1995 Gazette 1995/45)

(84) Designated Contracting States:
AT BE DE DK ES FR GB GR IT NL PT SE

(71) Applicants:
• NTL NEUE TRANSPORTLINIEN GMBH
45699 Herten (DE)
• Junitsky, Anatoly Eduardovich
Gomel, 246028 (BY)

(72) Inventor: JUNITSKY, Anatoly Eduardovich
Gomel, 246028 (BY)

(74) Representative: Zellentin, Wiger, Dipl.-Ing. et al
Patentanwälte
Zellentin & Partner
Rubensstrasse 30
67061 Ludwigshafen (DE)

(54) **LINE TRANSPORT SYSTEM**

(57) The proposed transport system comprises: a foundation (1), at least one rail (2) with a top unit (3), and at least one mobile unit (4) with wheels (5) in contact with the rail (2) and provided with a drive unit (6). According to the invention, the system is provided with a cable (7) made up of individual wires (7a) or strips (7b) and under a tension $N_1$ determined by formulae (I) and (II), where $N_2$ is the tensile strength and Q is the weight of the mobile unit. The cable (7) hangs from alternate rigid and mobile supports (8, 9), and the top unit (3) of the rail (2) is connected to the cable (7) by means of an intermediate unit (10) of variable height, its height increasing towards the mid-point between the supports (8, 9).

Fig. 6

Fig. 4

## Description

### Field of the Invention

The invention relates to machine building, specifically to linear high-speed transport systems. The transport system according to the invention is applicable for passenger and freight transport over short and long distances at a high travel speed. The proposed transport system can be used in land and sea transportation lines.

### State of the Art

It is a topical problem to develop a transport system which avoids environmental pollution, produces least noise, requires insignificant land areas, at the same time being efficient, highly safe, fast and inexpensive.

An electrical transport system is known in the art (US, A, 5045646) which includes a road with a pavement on which a transport vehicle moves. The road supports longitudinally arranged sections of a contact rail. A control system following commands from a control means at definite sections of the rail produces a given electrical potential at a certain rail section whereas a zero potential is maintained at all other sections. The transport vehicle has two contact means spaced along a common longitudinal axis.

The drawback of the said transport system consists in that the sections of the contact rail track arranged on the road surface cannot be ideally flat under constant dynamic loads. At the joints the intactness of the track degrades with time and it becomes impossible to travel at a high speed. A great number of joints produces frequent electric current commutations leading to overloads of the electrical grid and high energy consumption.

Also known is a transport system (JP, A, 4-17001) in which a high travel speed is ensured by system of linear electric motors and inductive coils secured on the land surface. In this transport system the rail is arranged on a base. Repeated high dynamic loads lead to a deformation of the base, what may result in a change of the rail profile, and high speed becomes impossible. Also, this transport system occupies much land, it affects ecology, is expensive and consumes much electrical power in operation.

Still another transport system (DE, A, 4029571) is known that includes at least one rail and one vehicle with its wheels driven along the rail that is arranged on the roadway. This transport system has the same drawbacks as all other known linear ground transportation systems. Moreover, due to the temperature strian of the rails on the roadway, accumulating shrinkage and the presence of joints along the track it is not possible to provide a smooth route for the vehicle, what means that a high travel speed on this transport system cannot be reached, and high safety cannot be guaranteed.

### Brief Summary of the Invention

It is an object of the present invention to provide a linear transport system which is designed with novel components, the combinations and variations of which allow for a perfectly flat smooth track with improved reliability, reduced consumption of materials, a high travel speed of vehicles, high efficiency and less harm for the environment.

The principle of the invention is that a linear transport system including a base, at least one rail with a head, one wheeled vehicle in contact with the rail and having a drive, is provided with a string arranged along the rail head and tensioned with force $N_1$ determined by the relationship:

$$0,5 \leq \frac{N_1}{N_2} \leq 0,999;$$

$$10 \leq \frac{N_1}{Q} \leq 10^4,$$

where $N_2$ is the tensile strength of the string; Q is the vehicle weight, the string being mounted on alternating rigid and movable supports, the rail head along its entire length being attached to the string by means of a spacer of variable height increasing towards the centre between the supports.

The string tensioned according to the material's tensile strength and linked with other elements of the transport system produces a perfectly flat, jointless, smooth way allowing to reach speeds of 500 km/h and more. Also, the proposed rail track design has high rigidity. For example, at $N_1$ = 1000 ton-forces (tf) a moving vehicle weighing Q = 2 tf in the middle between two supports bends the rail to an amount of 1/2000 of the distance between the supports or just 2,5 cm if the supports are spaced apart 50 m, the string stretches just 0,001 cm or about 0,000000001 of its length (if it is 10 km long). Since the tensioned string is attached to movable supports its strained condition changes insignificantly if even rigid anchoring supports are spaced apart 10 km with 500 vehicles between them (with a total weight of 1000 tf). Namely, the tensile stress would increase by 1/20000 or 0,00005 of the string's tensile strength. Therefore, at the upper limit of $N_1/N_2$ = 0,999 the string would have a sufficient strength margin. The lower limit $N_1/N_2$ is due to the strained condition produced, for example, by temperature strain, manufacturing inaccuracies and defects and similar factors. If $N_1/N_2$ < 0,5, there would be an unjustifiable extra consumption of the high-tensile and quite expensive string material, the string would also sag more due to its greater weight, as a result, the height of the rail would increase, thus strongly impairing its traverse (torsional) strength.

At $N_1/Q$ < 10 the vehicle would produce a significant sagging of the rail either resulting in lower rated speed or requiring to reduce the distance between supports and increase their number at the cost of greater material consumption. At $N_1/Q > 10^4$ the string cross-section would be increased excessively resulting in an unjustifiably high cost of the transport system and poor overall performance.

Since the rail head is attached to the string through a variable height spacer the string sagging under the weight of the rail is compensated, making the surface of the rail head perfectly flat without any sagging.

It is advisable to make the string from separate elements, such as wires or strips (bands). This increases the strength of the material (a small diameter of wires resp. a low thickness of strips leads to a greater tensile strength because of stretching and hardening of the material and a lower rate of defects). Also, it allows to use longer string elements reducing the number of joints in the string body and the rate of defects and improving reliability.

It is preferable to separate wires and/or strips in the string by means of a lubricant. If some wires or strips break they then contract towards the rigid supports to which they are fixed. They do not affect the strain-deformed state of the remaining intact string members and the system is operable even if 90 percent of wires and/or strips fail.

The individual wires and/or strips can be provided with insulating shells ensuring accurate cross-sectional dimensions and shapes of the string and protecting it against detrimental ambient effects, sudden temperature alterations, atmospheric humidity. The shells also insulate the string electrically from other elements of the rail and make it possible to pass electric current different from the working current passed through the rail head.

It is advisable to make the string current-conductive what allows to reduce the conductor's cross-section and reduce the loss of electric energy on the rail track. Also, by varying current parameters along the string independently from the parameters of the working current that is passed through the head, the heat generation in Joules can be controlled in response to external climatic factors, thus the same preset optimum temperature of the string can be maintained all year. This eliminates unfavourable additional stresses on the string caused by temperature strain.

It is preferable to make the spacer with a height increasing proportionally to the string sagging under the total weight of the rail, the string and the spacer. This allows to avoid sagging of the string and to make the working surface of the head ideally flat.

According to another preferred embodiment the spacer is made wiht a height increasing proportionally to the string sagging under the total weight of the rail, the string, the spacer and the vehicle. This eliminates the need to steer the vehicle's wheels in motion because in this case the working surface of the rail head is arranged along a convex parabola rather than a straight line. When the string sags additionally when the vehicle moves along it said parabola lowers to the position of the straight (horizontal) line.

The rail may be made hollow with the string arranged inside. This increases the transverse rigidity and stability of the rail, reduces its weight, saves materials and protects the string against unfavourable environmental effects.

It is advisable to tension the rail longitudinally with the force $N_3$ determined by the relationship:

$$0,1 \leq \frac{N_3}{N_4} \leq 0,9,$$

where $N_4$ is the longitudinal tensile strength of the hollow body.

This embodiment saves materials, makes the rail lighter and correspondingly reduces the string's sagging and the spacer's height in the span centre. Also, tension in the body eliminate the probability of origination of longitudinal compressive forces on it, for example, in summer when heat threatens to affect stability of the rail track. If $N_3/N_4$ is reduced to less than 0,1 this positive effect is not achieved, and if this ratio is increased to a value above 0,9 the body may break due to additional temperature strain and dynamic (impact) loads produced by the vehicles' wheels.

Preferably the hollow body is shaped as a cylindrical shell. This shape ensures rigidity of the rail required to withstand torsional vibrations and reduces aerodynamic resistance at side wind loads.

The hollow body of the rail may be shaped as a variable height spacer. This reduces the number of elements and makes the construction of the rail simpler.

The variable height spacer may be made from a porous material arranged inside the hollow body what ensures a rigid fixation of the relative position of the head and the string and a less weight of the spacer.

Preferably the porous material is a heat insulating material. This allows to maintain a given temperature conditions in the string.

Besides, it is preferable to choose an electric insulating material as a porous material allowing to feed voltage to the string independently and to protect the string against peak electrical loads, for example, when a lightning strikes the rail.

The porous material can be made as a damper to dampen vibrations of the head, the rail body and the string in respect to each other and to dampen high-frequency vibrations of the this elements in the rail track.

It is advisable to provide the rail with an additional string arranged parallel to the head, rigidly connected to it and tensioned with the force $N_5$ determined by the relationship:

$$0,5 \leq \frac{N_5}{N_6} \leq 0,999,$$

where $N_6$ is the tensile strength of the additional string.

This ensures the required torsional rigidity of the rail and the resistance of the head to lateral loads. The main string supports the weight of the additional string.

It is advisable to tension the rail head longitudinally with the force $N_7$ determined by the relationship:

$$0,1 \le \frac{N_7}{N_8} \le 0,9,$$

where $N_8$ is the longitudinal tensile strength of the head.

This adds to the straightness of the working surface of the head, increases the rail's rigidity and excludes compressive longitudinal forces in the head that are caused by the sun heat and may lead to a loss of its stability. All this allows to increase the vehicle's speed.

The transport system can be provided with an additional rail forming a common rail track with the said rail. This makes the vehicle's position on the rails more stable and allows to increase its speed.

It is advisable to arrange the rails in a horizontal line.

According to another embodiment of the invention the rails may be arranged in a vertical line.

The rail track can be provided with a third rail making the vehicle still more stable and allowing to supply its drive with three-phase current.

The three rails can be arranged in cross-section along a straight line. With such an arrangement of rails the vehicle is positioned above all three rails.

However, the three rails may also be arranged in cross-section in a triangle with its vertex facing down. With such an arrangement of the rails the vehicle moves on one of the rails, the other two being arranged at its sides or above.

It is also possible to arrange the three rails in cross-section in a triangle with the base down. Then two rails are located under the vehicle and one rail above it, what also ensures a stable position of the vehicle.

The third rail would allows to supply the vehicle in a combined way, for example, one rail is earth, the other one is the alternating current phase and the third one is the direct current phase; two types of alternating current differing in frequency and voltage; two types of direct current differing in voltage.

The rail track can be provided with a fourth rail making the transport system still more reliable and allowing to supply the vehicle with electrical energy in a combined way.

It is possible to arrange all the four rails in the cross-section along a straight line. It would allow the vehicle to run over all four rails.

But it is advisable to arrange the four rails in a quadrangle with one side facing down. It would allow the vehicle to run inside the quadrangle.

The four rails can also be arranged in a quadrangle in the cross section with the vertex of one angle facing down. This ensures stability of the vehicle and contributes to higher speeds.

It is advisable to make the rail head a current conductor allowing to feed electric power into the vehicle- and to connect the rail head to a source of direct or alternating electric current allowing to use the transport system under any conditions, depending on feasibility studies and operating conditions.

Ppreferably the rail is connected to the support through an electric insulator. This improves safety and reliability of the connection.

It is advisable to join rails together by means of lateral plates mutually spaced at a distance equal to:

$$1 \le \frac{l_1}{l_2} \le 100,$$

where $l_1$ is the distance between adjacent plates; $l_2$ is the distance between rails.

The lateral plates ensure stable design characteristics for the whole rail track. If $l_1$ is made less than $l_2$ the total weight of the plates increases, the sagging of the string increases, and the probability of an electric breakdown across one of the plates increases. If $l_1$ is more than 100 $l_2$ the cross-sectional rigidity of the rail must be increased significantly as well as its weight.

It is advisable to make the lateral plate in the form of a semicircle (half ring) or a ring. This allows the vehicle to run between the rails which would be joined by the plates into an integral piece.

Preferably an electric insulator is provided at the joint between the rail and the plate. It would insulate rail heads from one another and improve the reliability of the transport system.

It is also advisable to provide a damper at the joint between the rail and the plate dampening mutual vibrations of the rails and those in respect to the base improving the transport system's reliability.

It is preferable to join the movable support rigidly to the base and to join each rail to the support through a mechanism of their relative longitudinal displacement. This allows to adapt the transport system to the terrain, for example, in mountains or when it runs through an urban community.

It is advisable to join each rail to the support through a mechanism for adjusting its position in respect to the base. Thus the required longitudinal profile of the rail head is achieved for the whole period of its service life.

Preferably each rail is joined to the support through a damper allowing for dampening of vibrations of the rail track in respect to the base and supports, thus adding to the transport system's reliability.

It is advisable to join at least one plate between the supports with the help of a connecting rod arranged at an angle to the rail. This allows to relieve weight acting on the string from the rail track and the vehicle, and either to reduce the cross-sectional area of the string or to increase the distance between adjacent supports.

The connecting rod can be joined to the plate through a damper for dampening vibrations of the middle portion of the rail track located between the supports.

Preferably the string is attached rigidly to the rigid support. This allows to withstand unidirectional force produced by the tensioned string in case the string on the other side of the support breaks.

It is advisable to join the rail rigidly to the rigid support, what allows to transmit decelerating and/or accelerating loads from the rail to the supports after every 0,1 -10 km and to avoid their accumulation along the entire lenght of the rail.

Preferably the rigid link of the rail to the rigid support is provided with a gap in the traffic lineon which the vehicle moves to accommodate a rail switch, ensuring mobility of vehicles and safety of traffic along the transport system.

The rail track can be accommodated inside a tube insulating the transport system from the environment, i.e., from the air if the transport system is arranged on land, and from the water if the system runs under water, and from the earth if it is an underground transport system. A partial vacuum in the tube makes supersonic speed possible.

The tube can be located in the water, anchored and provided with floating bodies, allowing to connect continents with the transport system across oceans at a depth of 10 - 100 m or more.

It is advisable to tension the tube longitudinally with the force $N_9$, determined by the relationship:

$$0,1 \leq \frac{N_9}{N_{10}} \leq 0,999,$$

where $N_{10}$ is the longitudinal tensile strength of the tube.

This allows the tube to function as a string tensioned with the force $10^3$ - $10^5$ tf, and together with the strings of the rails this makes it possible to increase the distance between supports (anchors, in this case) up to several kilometres. It is all the more possible because the tube together with the rail track would have zero buoyancy, hence it would not sag in a stationary position.

The lower limit of $N_9$ is 0,1 $N_{10}$ because some portions of the route may be affected by underwater streams changing direction and water velocity in the course of the year causing additional and significant tensile stresses on the tube which may break it. Also, seasonal water temperature variations might occur that cause temperature strains. The upper limit $N_9$ = 0,999 is possible under stable conditions - a constant temperature of the water and absence of streams.

Preferably the cross-section centre of gravity of the tube is shifted downwards. This improves the transverse stability of the tube when it is located in the water and eliminates emergence of torsional vibrations in operation.

It is advisable to provide the transport system with at least one additional rail track arranged below the main rail track, whereby preferably the lateral plates of the rail tracks are joined with each other. With practically the same consumption of material this allows to increase the number of vehicles that can move on the system proportionally to the number of additional rail tracks. Consumption of materials would go up insignificantly because strings at different levels of rail tracks would operate synchronously under the vehicle weight irrespective on what level it moves. Therefore, the cross-sectional area and the tensile force of each string can be reduced.

The lateral plates of the rail track on different levels of the transport system can be joined together through dampers, dampening vibration of the rail track caused by a moving vehicle.

The vehicle should have at least two wheels running along one rail. They provide a stability of movement sufficient for the vehicle being in a hanging position under the rail.

The vehicle should preferably have at least three wheels running at least on two rails. Such an arrangement of wheels produces a stable position of the vehicle at any speed of movement which can be reached in the proposed transport system.

It is advisable to make the drive of the vehicle as an electrical device with wheels collecting current. This ensures a stable energy supply of the drive within the entire range of speeds of the vehicle.

Preferably the vehicle drive is a torque motor with transmission of rotation to at least one wheel. This simplifies the transmission of rotation from the drive motor to the wheel and makes the gear box or any other similar device lighter and ensure rotation of the drive wheel within a wide range of speeds.

According to another embodiment the vehicle drive is made as at least one motor-wheel allowing to do without a gear box what makes the vehicle lighter and its steering easier.

The drive of the vehicle can be a linear electric motor. This allows to transmit acceleration forces applied to the rail, bypassing the wheels of the vehicle at all speeds. It further allows to reduce the weight of wheels to a minimum and, correspondingly, to reduce dynamic loads on the "rail-wheel" pair caused by microirregularities, inaccuracies in manufacturing of mechanical members and other such factors, which is specifically essential at high speeds, i.e., speeds exceeding 100 m/s.

The drive of the vehicle may also be a propeller which can be arranged directly on the shaft of an electric motor and transmits the driving force directly to the vehicle bypassing both wheels and rails. At higher speeds, due to a suitable aerodynamic shape of the body of the vehicle, the vehicle can fly freely without loading the wheels which would in this case act just as current collectors.

Further the drive of the vehicle can be made as a gas turbine. This allows the vehicle to move with high speed without supplying it with electric energy through the rails, what may be important, for example, in regions where there is still no electrical grid, or in case of power supply failures.

Hereinafter one embodiment of the invention is described and illustrated in the enclosed drawings.

## Brief Description of the Drawings

Fig. 1    shows a view of a linear transport system with a longitudinal section of the variable height spacer when its height is proportional to the sagging of the string under the total weight of the rail, the string and the spacer;

Fig. 2    shows the same view when the height of the spacer is proportional to the string sagging under the total weight of the rail, the string, the spacer and the vehicle;

Fig. 3    shows a view of a linear transport system with alternating movable and rigid supports;

Fig. 4    shows a view of a linear transport system with two rails arranged horizontally relating one to the other and joined together with lateral plates;

Fig. 5    shows a view according to A in Fig. 1:

Fig. 6    shows a cross-sectional view an alternative embodiment of a rail made from separate wires;

Fig. 7    shows a cross-sectional view an alternative embodiment of a rail made from separate strips;

Fig. 8    shows a cross-sectional view of another alternative embodiment of a rail made as a hollow cylindrical body;

Fig. 9    shows a cross-sectional view of the rail track arranged on a movable support;

Fig. 10   (a, b, c) shows alternative arrangements of the vehicle on a monorail (cross-section of the rail);

Fig. 11   (a, b, c, d) shows alternative arrangements of the vehicle on a duorail with horizontal arrangement of rails;

Fig. 12   (a, b, c, d) shows alternative arrangements of the vehicle on a duorail with vertical arrangement of rails;

Fig. 13   (a, b, c, d, e) shows alternative arrangements of the vehicle on a triorail;

Fig. 14   (a, b, c, d) shows alternative arrangements of the vehicle on a quadrail;

Fig. 15   shows a view of an arrangement of a double-wheeled vehicle on the rail track, view B in Fig. 10b;

Fig. 16   shows a view of an arrangement of a three-wheeled vehicle, view C in Fig. 13e;

Fig. 17   (a, b, c, d, e) shows alternative designs of lateral plates;

Fig. 18   shows a view of a movable support with alternative arrangements of the vehicle, view D in Fig. 2;

Fig. 19   shows a cross-sectional view of an alternative arrangement of the movable support on a rigid support;

Fig. 20   shows a view of joining of lateral plates to adjacent supports by means of connecting rods;

Fig. 21   shows a view of an arrangement of the connecting rods, view E in Fig. 20;

Fig. 22   shows a view from above on a rail switch;

Fig. 23   shows a view of a linear transport system with the rail track accommodated in a tube installed under water;

Fig. 24   (a, b) shows alternative designs of the tube (cross-section);

Fig. 25   (a, b) shows a view of a linear transport system provided with two rail tracks;

Fig. 26   (a, b, c, d, e, f, g) shows side views of arrangements of a vehicle on a duorail with vertical arrangement of rails;

Fig. 27   (a, b, c, d) shows side views of alternative designs of the vehicle's drive on a duorail with vertical arrangement of rails;

Fig. 28   shows a longitudinal section of the vehicle's wheel suspension on a duorail with vertical arrangement of rails;

Fig. 29   (a, b, c, d) are alternative designs of the vehicle's wheels (section through the rotational axis).

## Preferred Embodiment of the Invention

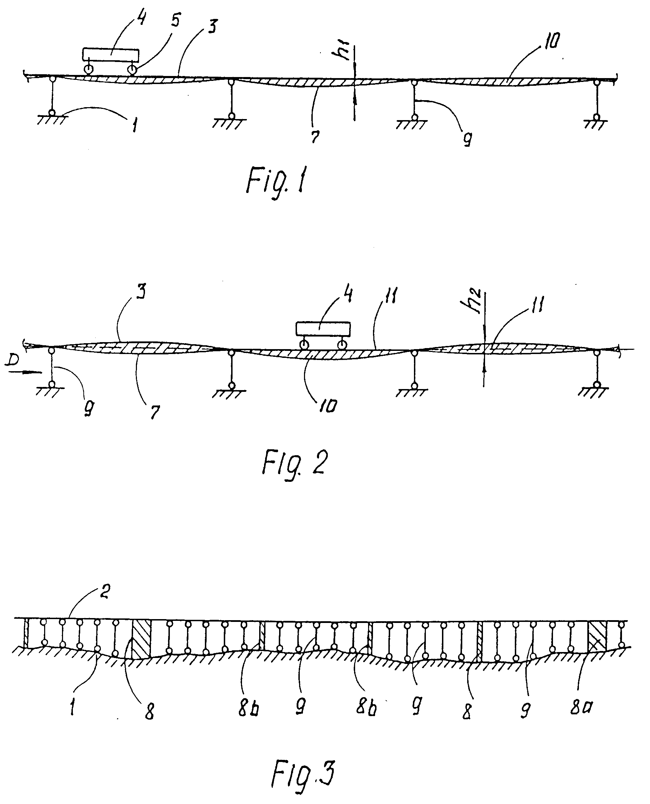

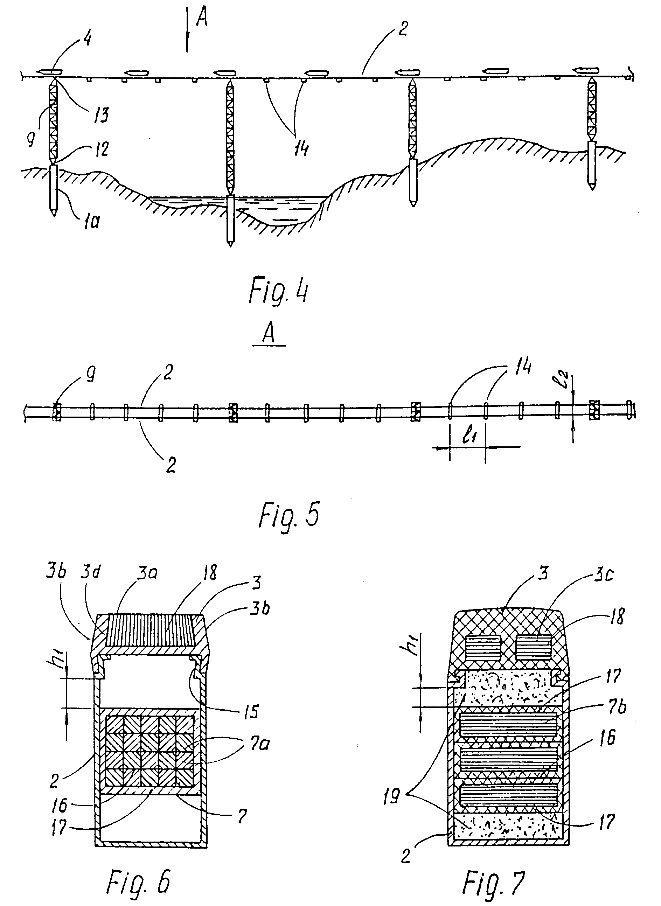

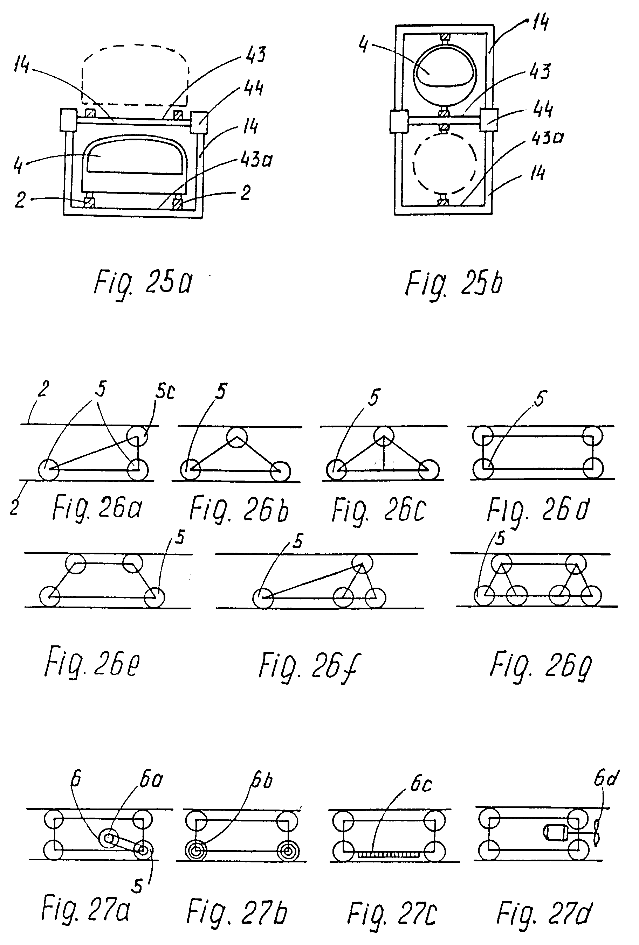

The linear transport system includes a base 1 (Fig. 1) which can be soil, various man-made structures, such as buildings, ferroconcrete cushions and the like, and it includes at least one rail 2 with a head 3 (Fig. 3, 6), at least one vehicle 4 running on wheels 5 along rail 2 (Fig. 1 2, 4) and having a drive 6 (Fig. 27), a string 7 (Fig. 6) arranged along head 3 of rail 2 and tensioned with the force $N_1$ determined by the relationship:

$$0,5 \le \frac{N_1}{N_2} \le 0,999;$$

$$10 \le \frac{N_1}{Q} \le 10^4 ,$$

where $N_2$ is the tensile strength of string 7; Q is the weight of the vehicle, the string being mounted on alternating rigid supports 8 (Fig. 3) and movable supports 9. Rigid supports 8 are subdivided into anchoring supports 8a to which string 7 is rigidly secured and braking supports 8b to which rail 2 is rigidly secured.

Head 3 of rail 2 is joined to string 7 by means of a spacer 10 having a variable height (Fig. 1, 2) that increases towards the centre between adjacent supports 9 (8).

The line of motion of vehicle 4 is the straight line $l_1$

(Fig. 2) connecting the rail heads in points located on adjacent supports.

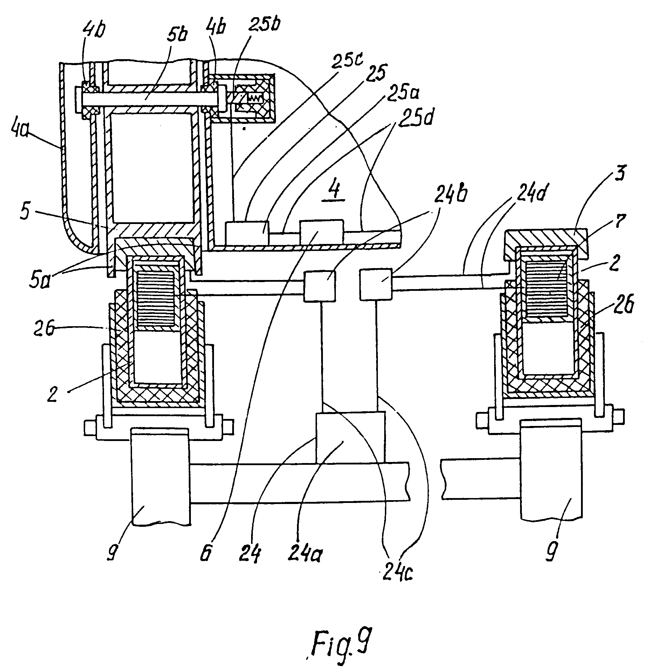

The height $h_1$ of spacer 10 (Fig. 1) that increases towards the middle of the distance between two supports is proportional to the sagging of string 7 under the total weight of rail 2, string 7 and spacer 10. Increasing height $h_2$ of spacer 10 (Fig. 2) is proportional to the sagging of string 7 under the total weight of rail 2, string 7, spacer 10 and vehicle 4. Support 9 (Fig. 4) is movable towards the line of motion of the vehicle due to lower joint 12 and upper joint 13 that are made, for example, as spherical, cylindrical (Fig. 9) or any other standard joints.

Joint 12 is mounted on the base that is made, for example, as ferroconcrete pile 1a (Fig. 4), and joint 13 joins the support to rail 2.

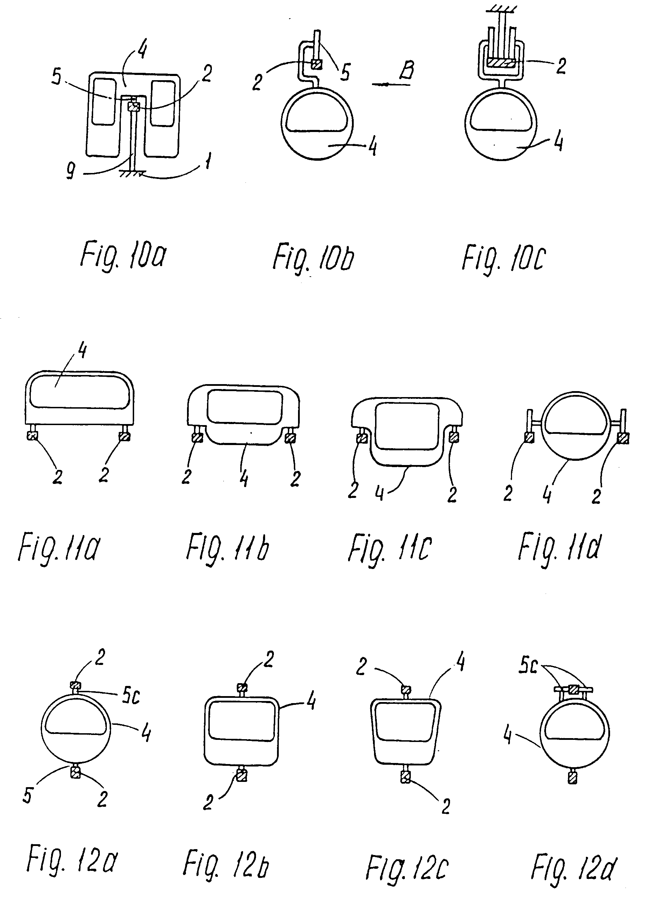

The linear transport system may have two rails 2 (Fig. 5) forming a common rail track in which rails 2 are arranged on a vertical (Fig. 12) or horizontal (Fig. 11) line, and they are joined through lateral plates 14 spaced at distance $l_1$ (Fig. 5) determined by the relationship:

$$1 \le \frac{l_1}{l_2} \le 100,$$

where $l_2$ is the distance between rails 2.

Rail 2 can be a hollow body (Fig. 6) which is joined to head 3 of rail 2 with wedge-shaped catch 15. Head 3 has top and lateral working surfaces 3a, 3b, respectively.

String 7 comprises separate wires 7a arranged parallel to each other and having either rectangular shape (Fig. 6) or triangular, hexagonal, round or any other cross-section. A liquid and/or solid lubricant 16 separates wires in the string. It may either occupy the space between wires 7a, or the letter can be coated with the lubricant. Wires 7a are enveloped by a protective shell 17 which may be metallic and/or polymeric or made from a composite material.

Shell 17 can be electrically non-conductive to insulate string 7 from other parts of rail 2, and/or heat non-conductive to insulate string 7 from the environment and other elements of rail 2, and/or damping to rest vibrations transmitted to string 7 by other elements of rail 2.

String 7 (Fig. 6) is rigidly linked to the inner surface of the wall of the body of rail 2, for example, by welding, gluing, riveting or any other known technique. In this case the free upper part of the body of rail 2 or upper part $h_1$ of the side walls of the body act as variable height spacer 10.

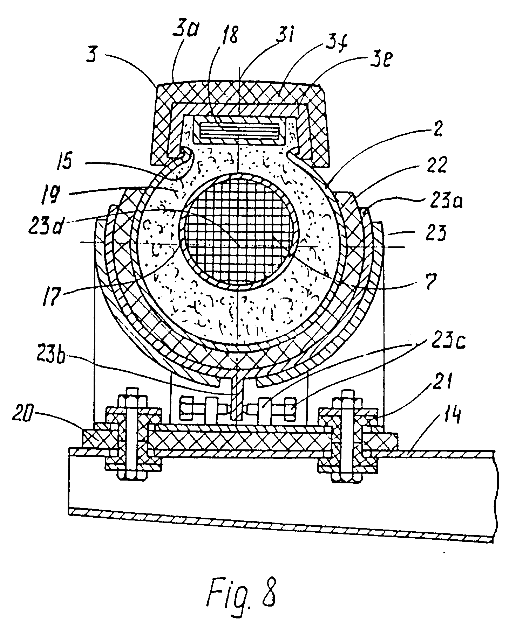

String 7 can be assembled from separate strips (bands) 7b (Fig. 7) arranged horizontally, vertically or in a combined manner and included into several separate insulating shells which may be rigidly joined together, or they can be separated from each other by the side wall of the body of rail 2 or by a lubricant 16.

Wires 7a or strips 7b can be made, for example, from high-strength steel and/or glass fibre, and/or carbon fibres, and/or high-strength polymeric material, ceramic material, and/or composite or other high-strength materials.

Rail 2 is provided with additional string 18 arranged along head 3 parallel to it and rigidly joined to it (Fig. 6). The additional string 18 is tensioned with the force $N_5$ determined by the relationship:

$$0,5 \le \frac{N_5}{N_6} \le 0,999,$$

where $N_6$ is the tensile strength of the additional string, and it is arranged either adjacently to the working surface of head 3 (Fig. 6) or in holes 3c in the body of head 3 (Fig. 7) or below head 3 (Fig. 8).

When additional string 18 is accommodated in a wedge-shaped groove 3d of the rail head, the face sides of the individual strips by which the additional string 18 is made up form the working surface 3a of the head. The strips of string 18 are pressed to form a monolith and are jammed in groove 3d. According to the other embodiment the strips of string 18 are separated by a lubricant.

Head 3 can be made from a metal, and/or ceramics, (cerment), and/or a polymer (a metal comprising polymer), and/or a composite or any other high-strength, wear-resistant and electrically conductive material either homogenous or laminated, e.g. as a near to rectangular, three-sided profile 3e provided with a coating 3f (Fig. 8).

Variable height spacer 10 can be made from a porous material 19 occupying free space in the hollow body of rail 2. When the body of rail 2 is a cylindrical shell (Fig. 8), porous material 19 is under a pressure of 1,1 - 100 atmospheres. In this case shell 17 of string 7 preferably has a cylindrical shape.

Porous (foamed) polymers, and/or metals, and/or ceramics, and/or composite materials as well as various fibrous materials both with closed and communicating pores can be used as the porous material. Preferably a heat insulating porous material is used (for thermal insulation of string 7), and or electrically non-conductive material (to insulate string 7 from other current-carrying rail elements), and/or a damper (for dampening mutual vibrations of the rail head, the rail body and the string).

The body of rail 2 is tensioned longitudinally with the force $N_3$ determined by the relationship:

$$0,1 \le \frac{N_3}{N_4} \le 0,9,$$

where $N_4$ is the longitudinal tensile strength of the body.

When the body of rail 2 is made from a thin-sheet highly strong material it can be tensioned with a force strong enough to relieve string 7 and to reduce its required cross-sectional area. Since the body of rail 2 is exposed to unfavourable external factors (alterations of temperature, decelerating and accelerating forces from vehicles, additional loads from vibrations of supports, etc.), the relative tensioning forces of rail 2 are reduced compared to string 7.

Head 3 of rail 2 is also tensioned longitudinally with the force $N_7$ determined by the relationship:

$$0,1 \leq \frac{N_7}{N_8} \leq 0,9,$$

where $N_8$ is the longitudinal tensile strength of the head.

This improves the rectilinearity of working surfaces of 3a and 3b of head 3, the rigidity of rail 2, particularly with respect to torsional vibrations, and eliminate compressive longitudinal forces throughout the seasonal temperature range of operation of the transport system. It also allows to increase the travel speed of the vehicle.

The relative tensioning forces of head 3 are similar to those of the body of rail 2 due to similar reasons.

Lateral plate 14 (Fig. 3) is electrically insulated from rail 2 and correspondingly from head 3 by means of an insulator 20. Also, plate 14 can be made from an electrically non-conductive material, for example, a composite material. Rail 2 is joined to plate 14 also through damper 21. Moreover, there is cylindrical damper 22 embracing the cylindrical shell of the body of rail 2 and rigidly arresting it. Dampers 21 and 22 can be made as electrical insulators, and electrical insulator 20 can act as a damper.

Rail 2 has a mechanism 23 for transverse adjustment (correction) of its position relative to lateral plate 14, which includes cylindrical guide 23a with protrusion 23b and a drive mechanism, such as a pair of "screw-nut" units 23c.

Depending upon the purpose of mechanism 23 its rotational axis 23d during correction can coincide with the cylindrical shell centre of the body of rail 2 or with longitudinal axis 3i passing through the centre of working surface 3a of head 3 of rail 2, or it can lie in between.

Head 3 of rail 2 and string 7 (Fig. 9) are made current-conductive, and they are connected to system 24 supplying electrical energy and containing a source 24a of electrical energy, distributing devices 24b and external 24c and internal 24d power supplying grids. Electrical energy source 24a can supply direct or alternating current, two-phase or three-phase current, having industrial, reduced or increased frequency.

An electric power supply system 25 feeding drive motor 6 of vehicle 4 includes a distributing device 25a, current collector 25b, internal supplying 25c and feeding 25d electrical circuits. The power supply system also includes wheel 5 contacting head 3 of rail 2 and having flanges 5a and axle 5b from which current is collected. The wheel is electrically insulated from body 4a of vehicle 4 by electrical insulators 4b.

Rail 2 is electrically insulated from support 9 by electrical insulator 26 which can act as a damper.

When the rail track includes a single rail 2, vehicle is pendant so that the vehicle body embraces the rail (Fig. 10a), or it is suspended on one (Fig. 10b) or both sides (Fig. 10c). The centre of masses of vehicle 4 should lie below rail 2. The transport system may be provided with an additional rail 2 forming an integral rail track with main rail 2.

Both rails 2 can be arranged horizontally (Fig. 11a, b, c, d) one beside the other in a transverse direction. Then the body of vehicle 4 can have either a flat bottom (Fig. 11a) arranged over the rail track, or the vehicle bottom can be curved (Fig. 11b) and accommodated between rails 2, or the vehicle bottom can be arranged below rails 2 (Fig. 11c), or the shell of the vehicle body can have a cylindrical cross-section (Fig. 11d) for operation in an environment of partial vacuum.

Both rails 2 can be arranged vertically one above the other. Then vehicle 4 is provided with at least one auxiliary wheel 5c (Fig. 12a) to ensure a stable position of vehicle 4 and to keep it from tipping. The body of vehicle 4 can be cylindrical or have any other shape, such as rectangular (Fig. 12b) or trapezoidal (Fig. 12c).

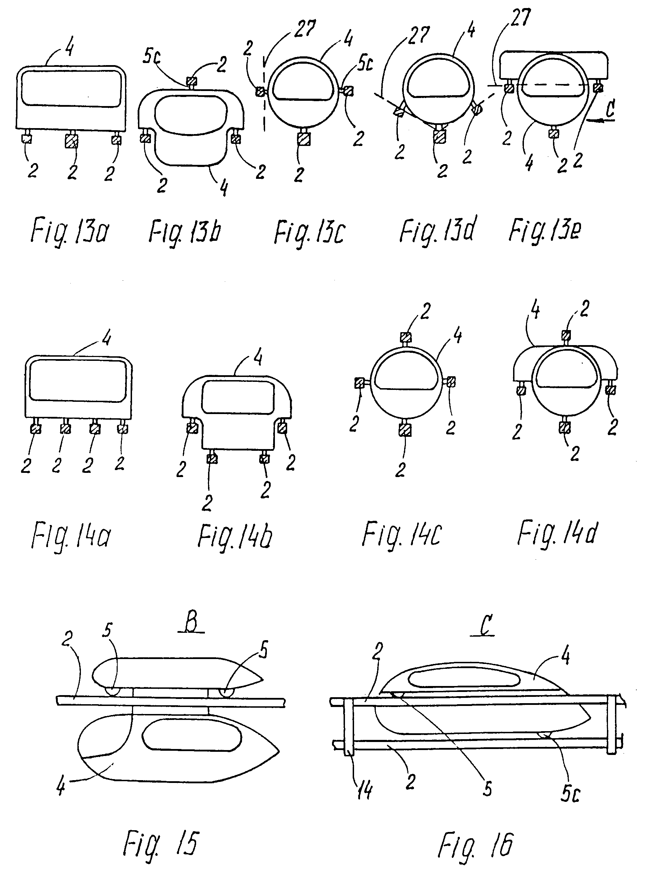

The rail track can be provided with a third rail 2 (Fig. 13a, b, c, d, e). Then rails 2 can be arranged in cross-section along a straight line (Fig. 13a), or as a triangle with its base facing down (Fig. 13b), or as a triangle with its vertex facing down (Fig. 13c, d, e). In the latter case plane 27 passing parallel to working surface of head 3 of rail 2 (or tangent to it along line 3i in case this surface is convex), can be either vertical (Fig. 13c) or sloped, passing, in particular, through the head of lower rail 2 (Fig. 13d), or horizontal (Fig. 13e).

The rail track can be provided with a fourth rail 2 (Fig. 14a, b, c, d). Then rails 2 can be arranged relatively to one another either along a straight line (Fig. 14a), or they form a quadrangle with one side facing down (Fig. 14b), or form a quadrangle with the vertex of one angle facing down (Fig. 14c, d).

Other alternatives of multirail tracks are possible, including those with a greater number of rails in different combinations of the described alternatives. When vehicle 4 runs along one rail it has at least two main wheels 5 (Fig. 15) for it to move.

When vehicle 4 runs along two rails 2 it has at least three wheels (Fig. 26a, b).

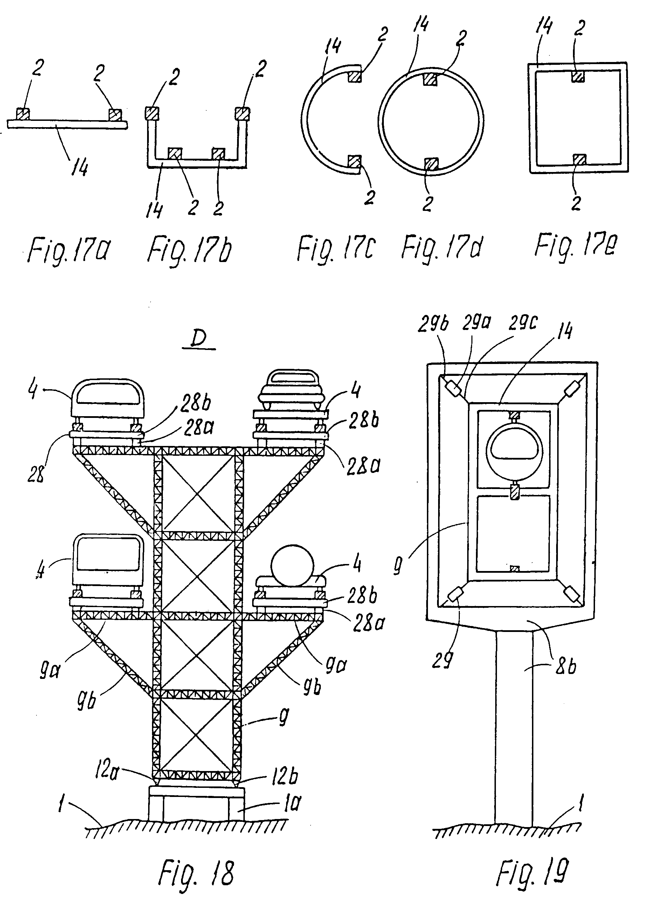

When vehicle 4 runs along three rails (Fig. 16) it has at least three wheels.

Depending upon the number and mutual configuration of rails 2 lateral plate 2 can be made as a straight beam (Fig. 17a), a semicircle (Fig. 17b, c), it can be shaped like a spout, C-shaped, or have a ring-like, circular, round or rectangular shape (Fig. 17d, e).

Movable support 9 (Fig. 18) can be moved along the line of motion of vehicle 4, but it is mounted rigidly in transverse direction by means of lower support joints 12a and 12b that are spaced apart and made, for example, as ball joints. Rail tracks are arranged on brackets 9a fixed by braces 9b. Each rail 2 and/or each rail track has a mechanism 28 of adjustment (correction) of its position in respect to support 9 (8) and correspondingly to base 1, including a mechanism 28a of vertical ("up-down") and a mechanism 28b of lateral ("right-left") adjustment.

A movable support 9 can also be arranged on a rigid support 8b (8a) rigidly fixed to base 1 (Fig. 19). Then the rail track of the proposed transport system, that includes two levels of rails with two vertically arranged rails at each level, is linked to support 8b (8a) through mechanisms 29 for longitudinal displacement comprising four identical mechanisms 29a, to vary the length of connecting rods, such as "screw-nut" pairs which are linked to support 8b (8a) and ring-shaped lateral plate 14 by connecting rods 29b and 29c, respectively.

In combination the four mechanisms 29 rigidly arrest the rail track in respect to support 8b (8a) in transverse direction, on the one hand, and allow the rail track to displace longitudinally together with lateral plate 14 within the limits required for normal functioning of the transport system, on the other hand. In this case the lateral plate 14 acts as movable support 9. As this displacement increases resisting forces would increase, therefore movable support 9 would also act as braking support 8b.

Also, the position ot the rail track in respect to base 1 can be corrected by varying the length of connecting rods 29b and 29c (correction "up-down", "right-left" and "rotation of lateral plate 14 around the motion line clockwise or counterclockwise"). The number of mechanisms 29 can differ from four.

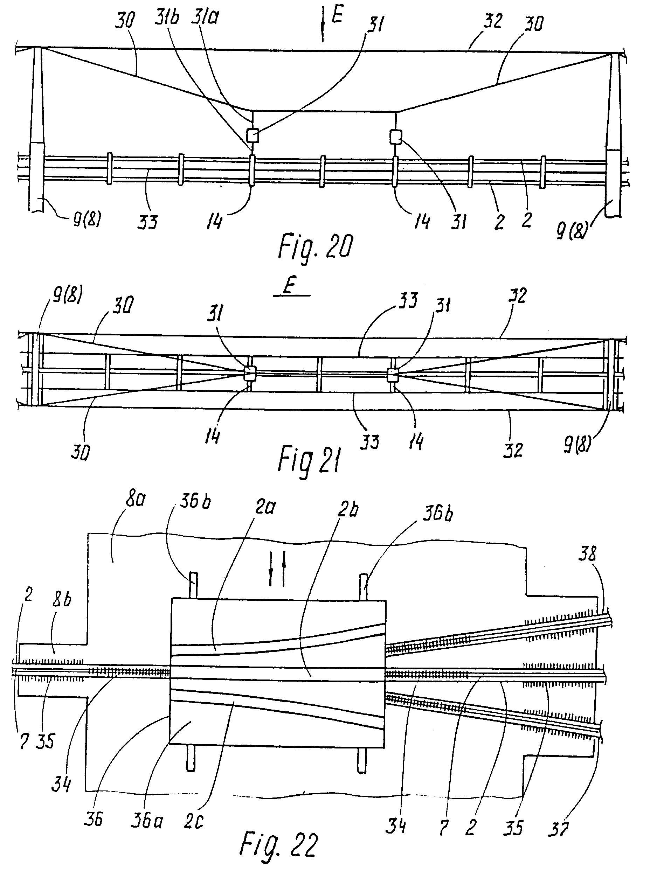

At least one lateral plate 14 (Fig. 20, 21) is linked to adjacent supports 9 (8) by means of connecting rod 30 being sloped towards the rail track. Plates 14 are linked with connecting rods 30 through dampers 31 and hangers 31a and 31b. Moreover, supports 9 (8) are joined which each other by connecting rods 32 directed along the motion line and joining adjacent supports 9 (8). Also, lateral plates 14 of the rail track are joined into a unit by connecting rods 33 directed along the motion line.

Each string 7 of rail 2 (Fig. 22) is rigidly secured, for example, by welding, soldering, gluing, wedging or any similar fixing means 34 to rigid support 8a, and each rail 2 is rigidly secured to rigid support 8b by fixing means 35. A gap is made in rigid the rigid fixing means 35 of rail 2 and correspondingly in the rigid fixing means 34 of string 7 to rigid support 8a. The gap accommodates rail switch 36 comprising platform 36a mounted on guides 36b and rail portions 2a, 2b, 2c to align main rail 2 (to the left of platform 36a) with branch lines 37 or 38 of the rail track, or with main rail 2 (to the right of platform 36a).

When passing through water 39, such as an ocean, the rail track is arranged inside a tube 40 having an underwater portion 40a, a ground portion 40b and an underground portion 40c. Underwater portion 40a is made with zero buoyancy, it is anchored to the bottom with anchors 41 and vertical anchoring connecting rods 41a and is provided with floating bodies 42 tensioning connecting rods 41a. Some floating bodies 42 are made as underwater stations 42a and act as rigid anchoring supports 8a, for this they are additionally joined to anchors with sloped anchoring connecting rods 41b.

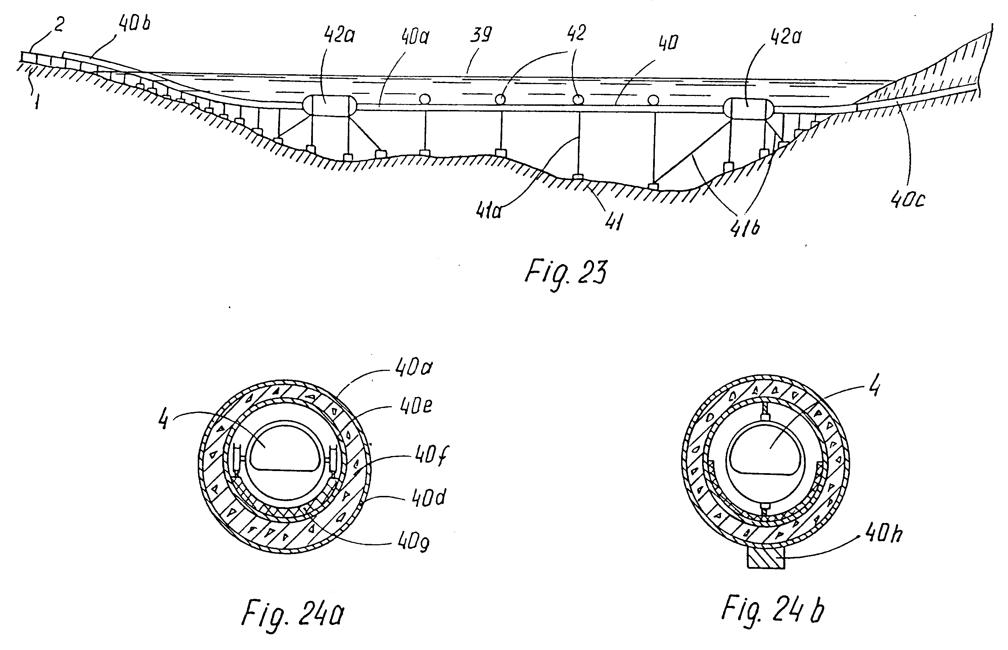

Tube 40a in its cross-section (Fig. 24a, b) has external 40d and internal 40e metal shells with concrete filling 40f in between, and an internal antifrictional coating 40g. The centre of gravity of the tube in its cross-section is lowered either by a thicker concrete filling 40f in the lower portion of the tube (Fig. 24a) or by a counterweight 40h (Fig. 24b).

Tube 40a (40b) is tensioned longitudinally with the force $N_9$ determined by the relationship:

$$0,1 \leq \frac{N_9}{N_{10}} \leq 0,999,$$

where $N_{10}$ is the longitudinal tensile strength of the tube.

The tension of the tube allows the latter to function as a string tensioned with the force $10^3 - 10^5$ tf. In combination with the strings of the rails this allows to increase the distance between supports (or, in case of underwater tracks, between anchors) up to hundreds of meters or several kilometres.

The transport system with rail track 43 can be provided with at least one additional rail track 43a (Fig. 25a, b) arranged under the main rail track. In this case the lateral plates 14 on different levels of rail tracks 43 and 43a are joined by dampers 44.

A different configuration of main and auxiliary wheels 5 (5c) of vehicle 4 is possible when rails 2 are arranged vertically (Fig. 26). In this case the minimum number of wheels the vehicle needs is three. At least two vehicles can be combined into a short or long train.

Drive motor 6 of vehicle 4 can be a torque motor 6a (a rotary electric motor, an internal combustion engine, etc.,Fig. 27) with transmission of rotation to at least one wheel (Fig. 27a); at least one motor-wheel 6b (electrical or other); a linear electric motor 6c (Fig. 27c); a propeller 6d (Fig. 27d); a gas turbine (not shown).

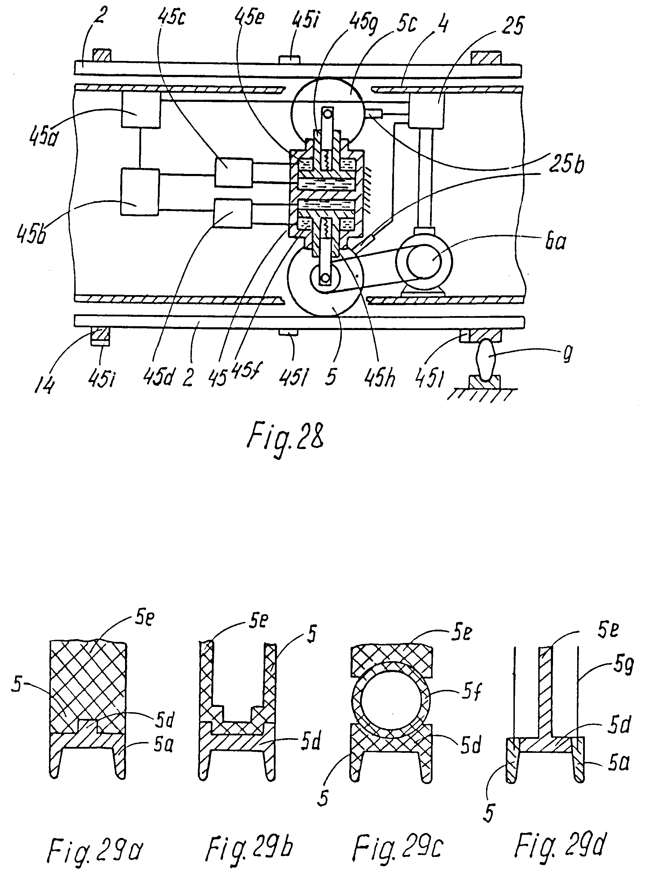

Taking into account susceptibility of the rail track to dynamic loads and vibrations, vehicle 4 is provided with a special hydraulic (and/or pneumatic, and/or electromagnetic) system 45 of suspension of wheels 5 and 5c (Fig. 28). An embodiment is shown for the duorail with vertical arrangement of wheels 2 including a command unit 45a, a unit 45b controlling hydraulic subsystems 45c and 45d, respectively, hydraulic cylinders 45e and 45f having rods 45g resp. 45h, and sensors 45i mounted on rails 2, lateral plates 14 and supports 9 (8) registering the condition of the transport system under strain.

At high speed of vehicle 4 it is very important to reduce dynamic loads caused by microirregularities of the rail tracks and its vibrations. For this purpose wheels 5 (Fig. 29) are composed of a rim 5d and a disc 5e made from an elastic light material, such as a foamed composite material. A torroidal elastic member 5f (Fig.

29c) can be placed between rim 5d and disc 5e. Flanges 5a need not be attached to rim 5d, being directly fixed to the hub of wheel 5 by means of resilient plates 5g (Fig. 29d).

With the help of technical equipment string 7 is pre-tensioned to a given value, and its ends are tightly secured by a known method, such as welding, to the rigid anchoring supports 8a that are spaced apart at distances of 1 - 100 km (depending upon the terrain, the tensioning force of the string, the material from which the string is made and other similar factors). Portions of wires 7a or strips 7b in the string are joined together butt-to-butt, for example, by welding, and to ensure a string free of the defects the butts are distributed along the string 5 so that there would be just one joint in any random cross-section.

Braking supports 8b and movable supports 9 are erected before or when the string is tensioned or after that. The string is tensioned either together with insulating shells 17, or one or several strings are tensioned consecutively. Then the hollow body of each rail 2 is erected and tensioned with a given force, and its ends are secured, for example, by welding to braking supports 8b spaced at 0,1 - 10 km (depending upon the weight of vehicles, traffic intensity, the terrain and other similar factors).

Head 3 of rail 2 and additional string 18 are erected in a similar way. Then the hollow body of rail 2 and head 3 are erected from support to support using, for example, a beam, so that working surfaces 3a and 3b of the rail head would produce perfectly flat surfaces (for example, using a laser beam). After that string 7 and the hollow body of rail 2 are joined together (Fig. 6), for example, by resistance welding, and the rail body is released from the said beam. Then lateral plates 14 are erected, and finally the rail track is adjusted relative to base 1 using mechanisms 28a and 28b. To eliminate microirregularities and microwaviness of the working surfaces of the head and its gap-free joints along the rail they can be smoothend along the entire transport system. The sagging of the string additionally produced by the weight of lateral plates 14 is eliminated either using damper 31 (Fig. 20) by shortening hanger 31a or 31b, or the hollow body of the rail is joined to the string so that after the lateral plates are mounted the string lowers into a position in which the working surfaces of the rail head are in the required position.

Erection of the transport system can be accomplished using a specially designed track-laying machine, for which string 7 and other tensionable rail parts are tensioned on the machine. The machine moves along the route and leaves behind erected movable supports 9 with a finished rail track 43 which is rigidly secured on rigid supports 8 erected beforehand.

After that the transport system is ready for operation. The optimal characteristics of the system are as follows: span 25 - 50 m; rail height 10 - 20 cm; static sagging of the string $h_1$ = 0,5 - 5 cm at $N_1$ = 500 - 2000 tf and Q = 1 - 2 tf; dynamic sagging 0,1 - 2 cm.

When vehicle 4 moves along rail rack 43 the strained rail span sags more, the nearer the vehicle moves and more towards the centre of the span, and less when it moves towards a rigid support. The maximum sagging of the rail when the vehicle is at rest in the centre of the span is (with the claimed parameters of the transport system) within 0.5 - 5 cm. As the speed increases this sagging would reduce in reverse proportion to the speed due to the rail inertia factor.

Since the dynamic sagging of the rail tends to zero as the support is approached the rail regains its original position. Thanks to this and thanks to a sufficient local vertical rigidity of the rail the vehicle passes smoothly pass the support without producing any dynamic impacts.

Sensors 45i are provided along the entire route of the transport system that send information about the condition of the rail track under strain in the zone where the vehicle passes, for example, by radiopulses, to its command unit 45a (Fig. 28) which controls unit 45b of hydraulic cylinders 45e and 45f. The hydraulic cylinders move wheels 5 and 5c up and down (synchronously or separately) to ensure the vehicle moves smoothly by compensation of the sagging of the rail under the moving load (a lowering of the vehicle due to additional rail sagging is avoided) and dampening of low frequency vibrations of the rail.

Control of the vehicle wheels is facilitated because the rail has stable previously known physical and mechanical characteristics. Therefore, with a known speed and mass of the vehicle the sagging and the vibrations of the rail havea known pattern, and the data are stored in the onboard computer of the vehicle.

Vibrations are also dampened by the system of dampers along the rail track, namely electric insulator 23 made as a damper; dampers 31, 21, 22, dampening porous material 19. Vibrations of the rail track do not affect the smooth movement of the vehicle and do not impede its high speed exceeding 100 m/s, because the amplitude of vibrations, that also have low frequency, is about 0,001-0,0001 of the span (the amplitude of vibrations, for example, of a steel railway bridge span under such loads is higher). Vibrations are also dampened by consecutive vehicles following previous vehicles 4 at a distance ensuring that the vibrations they produce occur in the anti-phase. A linear computer controls the process and correspondingly forms the train of moving vehicles.

Therefore, notwithstanding the seeming flexibility of the rail track and a very low consumption of materials (about 100 kg per meter), the proposed transport system has a very rigid rail track, the rigidity of which under strain is not lower than the rigidity of automobile and railways bridges under a rated load, although the latter need much more material to construct.

Due to the great length of string 7 and thanks to movable supports 9 that do not restrict the longitudinal displacements of the string the condition of the string under strain practically remains unchanged in operation (the relative variations amount to less than 0,001). Temperature strains lead to great variations of the condition of the string under strain (in some instances their relative effect can reach values of 0,5). Under stable thermal conditions of the operation of the system, for example, in underwater 40a or underground 40c tunnels, $N_1/N_2$ can be reduced to 0,9 - 0,999.

Consideration of the vehicle weight during erection of the transport system allows to eliminate the need to steer wheels in motion, because in this case the working surface of the rail head is positioned between the supports not in a straight line, but following a parabolic line (Fig. 2) that is shifted above straight line 11 mirror-symmetrically to the additional sagging of string 7 under the weight of a moving load. Therefore, as a result of the sagging of the rail this weight makes the working surface of the head between spans straight (rectilinear). This embodiment of the transport system is applicable under conditions of a stable weight of vehicles and constant speed.

Due to a small mass of wheel 5 and its vertical and horizontal flexibility the wheel runs over rail 2, which is quite rectilinear, without any significant dynamic (impact) load, even at maximum speed.

Since electric power is transmitted to the drive 6 only via wheels 5 without any sliding contact vehicle 4 can be supplied with considerable electric power at maximum speed.

In case of a monorail (Fig. 10) the drive 6 can be an electrical device as, e.g., an electric motor supplied by onboard batteries, or it can differ from an electrical device, for example, being an internal combustion engine.

In case of a multilevel rail track (Fig. 19, 25a, 25b) the strings of all rail tracks sag together under the vehicle weight through the action of lateral plates 14, irrespective whether the traffic is directed along the upper or the lower track. Therefore, the tensile force $N_1$ of each string can be reduced, correspondingly they can be lighter and less material consuming.

In another embodiment vehicle 4 can run along rail 2 on a magnetic, and/or electromagnetic, and/or pneumatic (cushion) suspension. In this case wheels 5 act only as current collectors.

Vehicle 4 is provided with a balancing system to keep its centre of masses permanently in the vertical plane passing through the plane of symmetry of rail track 43.

Applications

The rail track of the proposed transport system, with its low material consumption and seeming flexibility, is rigid and perfectly flat allowing to use it as a high speed route passing over land, underground and underwater over any terrain. The advanced transport route can connect cities, any communities and even continents to transport people and freight.

Reference list

| | |
|---|---|
| 1 | base |
| 2 | rail |
| 2a | rail portion |
| 2b | rail portion |
| 2c | rail portion |
| 3 | head |
| 3a | upper working surface of the head |
| 3b | lateral working surface of the head |
| 3c | hole |
| 3d | wedge-shaped groove |
| 3e | rectangular three-sided profile |
| 3f | coating |
| 3i | longitudinal axis of the head |
| 4 | vehicle |
| 4a | body |
| 4b | electric insulator |
| 5 | wheel |
| 5a | flange |
| 5b | axle |
| 5c | auxiliary wheel |
| 5d | rim |
| 5e | disc |
| 5f | torroidal elastic member |
| 5g | resilient plate |
| 6 | drive |
| 6a | torque motor |
| 6b | motor-wheel |
| 6c | linear electric motor |
| 6d | propeller |
| 7 | string |
| 7a | wire |
| 7b | strip |
| 8 | rigid support |
| 8a | rigid anchoring support |
| 9 | movable support |
| 10 | spacer |
| 11 | straight line |
| 12 | lower joint of the support |
| 12a | left joint |
| 12b | right joint |
| 13 | upper joint of the support |
| 14 | lateral plate |
| 15 | wedge-shaped catch |
| 16 | lubricant |
| 17 | insulating shell |
| 18 | additional string |
| 19 | porous material |
| 20 | electrical insulator |
| 21 | damper |
| 22 | damper |
| 23 | transverse adjustment mechanism |
| 23a | cylindrical guide |
| 23b | protrusion |
| 23c | screw-nut unit |
| 23d | rotational axis |
| 24 | power supply system |
| 24a | source of electric energy |

| | |
|---|---|
| 24b | distributing device |
| 24c | external power supplying grid |
| 24d | internal power supplying grid |
| 25 | power supply system |
| 25a | distributing device |
| 25b | current collector |
| 25c | internal electrical power supplying grid |
| 25d | electrical feeding grid |
| 26 | electrical insulator made as damper |
| 27 | plane |
| 28 | adjusting mechanism |
| 28a | mechanism for vertical adjustment |
| 28b | mechanism for horizontal adjustment |
| 29 | mechanism for mutual longitudinal displacement |
| 29a | mechanism of varying length of connecting rods |
| 29b | connecting rod |
| 29c | connecting rod |
| 30 | connecting rod |
| 31 | damper |
| 31a | hanger |
| 31b | hanger |
| 32 | connecting rod |
| 33 | connecting rod |
| 34 | fixing means of string |
| 35 | fixing means of rail |
| 36 | rail switch |
| 36a | platform |
| 36b | guide |
| 37 | branch line of rail track |
| 38 | branch line of rail track |
| 39 | water basin |
| 40 | tube |
| 40a | underwater portion of the tube |
| 40b | ground portion of the tube |
| 40c | underground portion of the tube |
| 40d | outer shell |
| 40e | inner shell |
| 40f | concrete filling |
| 40g | antifrictional coating |
| 41 | anchor |
| 41a | anchoring rod |
| 41b | sloped anchoring rod |
| 42 | floating body |
| 42a | underwater station |
| 43 | rail track |
| 43a | additional rail track |
| 44 | damper |
| 45 | wheel suspension system |
| 45a | command unit |
| 45b | control unit |
| 45c | hydraulic subsystem |
| 45 | d hydraulic subsystem |
| 45e | hydraulic cylinder |
| 45f | hydraulic cylinder |
| 45g | rod |
| 45h | rod |

## Claims

1. Linear transport system including a base (1) and comprising at least one rail (2) having a head (3), at least one vehicle (4) directed on wheels (5) along rail (2) and having a drive (6), characterized in that it is provided with a string (7) arranged along head (3) of rail (2) and tensioned with force $N_1$ determined by the relationship:

$$0,5 \le \frac{N_1}{N_2} \le 0,999;$$

$$10 < \frac{N_1}{Q} < 10^4,$$

where $N_2$ is the tensile strength of string (7) and Q is the weight of vehicle (4), the string (7) being mounted on alternating rigid and movable supports (8, 9) and the head (3) of rail (2) being connected with string (7) through spacer (10) of variable height increasing towards the centre between adjacent supports (8, 9).

2. Linear transport system according to claim 1, characterized in that string (7) is made from separate wires (7a).

3. Linear transport system according to claim 1, characterized in that string (7) is made from separate strips (7b).

4. Linear transport system according to claims 2 or 3, characterized in that wires (7a) and/or strips (7b) in string (7) are separated by a lubricant (16).

5. Linear transport system according to claims 2 or 3, characterized in that wires (7a) and/or strips (7b) are covered by an insulating shell (17).

6. Linear transport system according to claim 1, characterized in that string (7) is current conductive.

7. Linear transport system according to claim 1, characterized in that the increasing height of spacer (10) is proportional to the sagging of string (7) under the total weight of rail (2), string (7) and spacer (10).

8. Linear transport system according to claim 1, characterized in that the increasing height of string (10) is proportional to the sagging of string (7) under the total weight of rail (2), string (7), spacer (10) and vehicle (4).

9. Linear transport system according to claim 1, characterized in that rail (2) is made as a hollow body, and string (7) is arranged inside of it.

**10.** Linear transport system according to claim 9, characterized in that the body of rail (2) is tensioned longitudinally with the force $N_3$ determined by the relationship:

$$0,1 \leq \frac{N_3}{N_4} \leq 0,9,$$

where $N_4$ is longitudinal tensile strength of rail (2).

**11.** Linear transport system according to claim 9, characterized in that the hollow body of rail (2) is shaped as a cylindrical shell.

**12.** Linear transport system according to claim 9, characterized in that the hollow body of rail (2) is made as variable height spacer (10).

**13.** Linear transport system according to claim 9, characterized in that variable height spacer (10) is made from porous material (19) arranged inside the hollow body of rail (2).

**14.** Linear transport system according to claim 13, characterized in that porous material (19) is held under a pressure of 1,1 - 100 atmospheres.

**15.** Linear transport system according to claim 13, characterized in that porous material (19) is made as heat insulator.

**16.** Linear transport system according to claim 13, characterized in that porous material (19) is made as electric insulator.

**17.** Linear transport system according to claim 13, characterized in that porous material (19) is made as a damper.

**18.** Linear transport system according to claim 1, characterized in that rail (2) is provided with an additional string (18) arranged along head (3) parallel to it and rigidly joined to it.

**19.** Linear transport system according to claim 18, characterized in that additional string (18) is tensioned with the force $N_5$ determined by the relationship:

$$0,5 \leq \frac{N_5}{N_6} \leq 0,999,$$

where $N_6$ is the tensile strength of additional string (18).

**20.** Linear transport system according to claim 1, characterized in that head (3) of rail (2) is tensioned longitudinally with the force $N_7$ determined by the relationship:

$$0,1 \leq \frac{N_7}{N_8} \leq 0,9,$$

where $N_8$ is longitudinal tensile strength of head (3).

**21.** Linear transport system according to claim 1, characterized in that it is provided with an additional rail (2) is forming with said rail (2) a single rail track (43).

**22.** Linear transport system according to claim 21, characterized in that both rails (2) are arranged horizontally in respect to each other.

**23.** Linear transport system according to claim 21, characterized in that both rails (2) are arranged vertically in respect to each other.

**24.** Linear transport system according to claim 21 characterized in that rail track (43) is provided with a third rail (2).

**25.** Linear transport system according to claim 24, characterized in that three rails (2) in cross section are arranged relative one to another along a straight line.

**26.** Linear transport system according to claim 24, characterized in that three rails (2) in cross section are arranged relative one to another in a triangle with the base facing down.

**27.** Linear transport system according to claim 24, characterized in that three rails (2) in cross section are arranged relative one to another in a triangle with the vertex facing down.

**28.** Linear transport system according to claim 24, characterized in that rail track (43) is provided with a fourth rail (2).

**29.** Linear transport system according to claim 28, characterized in that four rails (2) in cross section are arranged relative one to another along a straight line.

**30.** Linear transport system according to claim 28, characterized in that four rails (2) in cross section are arranged relative one to another in a quadrangle with one side facing down.

**31.** Linear transport system according to claim 28, characterized in that four rails (2) in cross section are arranged one relative another in a quadrangle with the vertex of one angle facing down.

**32.** Linear transport system according to claim 1, characterized in that the head (3) of rail (2) is current-conductive.

**33.** Linear transport system according to claim 32, characterized in that head (3) of rail (2) is connected to a source (24a) of direct electric current.

**34.** Linear transport system according to claim 32, characterized in that the head (3) of rail (2) is connected to source (24a) of alternating electric current.

**35.** Linear transport system according to claim 32, characterized in that rail (2) is joined to support (8, 9) through electrical insulator (26).

**36.** Linear transport system according to claims 21 or 24, characterized in that rails (2) are joined together by lateral plates (14) spaced at distances $l_1$ determined by the relationship:

$$1 \leq \frac{l_1}{l_2} \leq 100,$$

where $l_2$ is the distance between the rails.

**37.** Linear transport system according to claim 36, characterized in that lateral plate (14) is shaped into a semi-ring.

**38.** Linear transport system according to claim 36, characterized in that lateral plate (14) is ring-shaped.

**39.** Linear transport system according to claim 36, characterized in that it is provided with an electrical insulator (20) placed at the link of lateral plate (14) with rail (2) to separate the individual rails (2) of rail track (43) from each other.

**40.** Linear transport system according to claim 36, characterized in that it is provided with a damper (21) placed at the link of rail (2) with lateral plate (14).

**41.** Linear transport system according to claim 1, characterized in that movable support (9) is rigidly joined to base (1), and rail track (43) is joined to rigid support (8) through a mechanism (29) of mutual relative longitudinal displacement.

**42.** Linear transport system according to claims 1 or 21, characterized in that rail (2) and/or rail track (43) are joined to support (8, 9) through mechanism (28) for adjusting its position relative to base (1).

**43.** Linear transport system according to claims 1 or 21, characterized in that rail (2) and/or rail track (43) are joined to support (8, 9) through a damper (26).

**44.** Linear transport system according to claim 36, characterized in that at least one lateral plate (14) is joined to adjacent supports (8, 9) by connecting rod (30) arranged at an angle to rail track (43).

**45.** Linear transport system according to claim 44, characterized in that connecting rod (30) is joined the lateral plate (14) through damper (31).

**46.** Linear transport system according to claim 1, characterized in that each string (7) is rigidly joined to rigid support (8a).

**47.** Linear transport system according to claim 1, characterized in that each rail (2) is rigidly joined to rigid support (8b).

**48.** Linear transport system according to claim 47, characterized in that the means for rigid joining of rail (2) to rigid support (8b) is provided with a gap to accommodate rail switch (36) along the line of traffic along rail (2).

**49.** Linear transport system according to claims 1 or 21, characterized in that rail track (43) is arranged inside a tube (40).

**50.** Linear transport system according to claim 49, characterized in that tube (40a) is placed in water, anchored on the bottom by means of anchors (41) and provided with floating bodies (42).

**51.** Linear transport system according to claims 49 or 50, characterized in that tube (40) is tensioned longitudinally with the force $N_9$ determined by the relationship:

$$0,1 \leq \frac{N_9}{N_{10}} \leq 0,999,$$

where $N_{10}$ is the longitudinal tensile strength of tube (40).

**52.** Linear transport system according to claim 50, characterized in that tube (40a) has its cross sectional centre of gravity shifted downwards.

**53.** Linear transport system according to claims 1 or 21, characterized in that it includes at least one additional rail track (43a) that is arranged under main rail tack (43), the lateral plates (14) of rail tracks (43, 43a) being joined together.

**54.** Linear transport system according to claim 53, characterized in that lateral plates (14) of rail tracks are joined together through a damper (44).

**55.** Linear transport system according to claim 1, characterized in that vehicle (4) has at least two wheels (5) contacting one rail (2).

**56.** Linear transport system according to claim 21, characterized in that vehicle (4) has at least three wheels (5, 5c) contacting at least two rails (2).

**57.** Linear transport system according to claim 1, characterized in that drive (6) of vehicle (4) is a torque motor (6a) with the transmission of rotation to at least one wheel (5).

**58.** Linear transport system according to claim 1, characterized in that the drive (6) of vehicle (4) is at least one motor-wheel (6b).

**59.** Linear transport system according to claim 1, characterized in that the drive (6) of vehicle (4) is a linear electric motor (6c).

**60.** Linear transport system according to claim 1, characterized in that the drive (6) of vehicle (4) is a propeller (6d).

**61.** Linear transport system according to claim 1, characterized in that the drive (6) of vehicle (4) is a gas turbine.

**Amended claims under Art. 19.1 PCT**

1. Linear transport system including at least one vehicle (4) having a drive (6) and being directed on wheels (5) along at least one rail (2), the latter being provided with a head (3) and connected with a pre-tensioned longitudinal element (7) being mounted on supports (8, 9) that are placed on a base (1), characterized in that the pre-tensioned longitudinal element is made up by at least one string (7) being connected with the head of each rail all along its length through spacers of variable height.

2. Linear transport system according to claim 1, characterized in that the height of said spacers increases towards the centre between adjacent supports (8, 9).

3. Linear transport system according to claim 1, characterized in that the supports are alternately rigid and movable as they are located one after the other.

4. Linear transport system according to claim 1, characterized in that the pre-tensioned longitudinal element that is made up by at least one string is tensioned with force $N_1$ determined by the relationship:

$$05 \le \frac{N_1}{N_2} \le 0,999;$$

$$10 < \frac{N_1}{Q} < 10^4.$$

where $N_2$ is the tensile strength of string (7) and Q is the weight of vehicle (4).

5. Linear transport system according to claim 1, characterized in that string (7) is made from separate wires (7a).

6. Linear transport system according to claim 1, characterized in that string (7) is made from separate strips (7b).

7. Linear transport system according to claims 2 or 3, characterized in that wires (7a) and/or strips (7b) are separated by a lubricant (16).

8. Linear transport system according to claims 6 or 7, characterized in that wires (7a) and/or strips (7b) are covered by an insulating shell (17).

9. Linear transport system according to claim 1, characterized in that string (7) is current conductive.

10. Linear transport system according to claim 1, characterized in that the increasing height of spacer (10) is proportional to the sagging of string (7) under the total weight of rail (2), string (7) and spacer (10).

11. Linear transport system according to claim 1, characterized in that the increasing height of spacer (10) is proportional to the sagging of string (7) under the total weight of rail (2), string (7), spacer (10) and vehicle (4).

12. Linear transport system according to claim 1, characterized in that rail (2) is made as a hollow body, and string (7) is arranged inside of it.

13. Linear transport system according to claim 12, characterized in that the body of rail (2) is tensioned longitudinally with the force $N_3$ determined by the relationship:

$$0,1 \le \frac{N_3}{N_4} \le 0,9,$$

where $N_4$ is longitudinal tensile strength of rail (2).

14. Linear transport system according to claim 12, characterized in that the hollow body of rail (2) is shaped as a cylindrical shell.

15. Linear transport system according to claim 12, characterized in that the hollow body of rail (2) is made as variable height spacer (10).

16. Linear transport system according to claim 12, characterized in that variable height spacer (10) is made from porous material (19) arranged inside the hollow body of rail (2).

17. Linear transport system according to claim 16, characterized in that porous material (19) is held under a pressure of 1,1 - 100 atmospheres.

18. Linear transport system according to claim 16, characterized in that porous material (19) is made as heat insulator.

19. Linear transport system according to claim 16, characterized in that porous material (19) is made as electric insulator.

20. Linear transport system according to claim 16, characterized in that porous material (19) is made as a damper.

21. Linear transport system according to claim 1, characterized in that rail (2) is provided with an additional string (18) arranged along head (3) parallel to it and rigidly joined to it.

22. Linear transport system according to claim 21, characterized in that additional string (18) is tensioned with the force $N_5$ determined by the relationship:

$$0,5 \leq \frac{N_5}{N_6} \leq 0,999,$$

where $N_6$ is the tensile strength of additional string (18).

23. Linear transport system according to claim 1, characterized in that head (3) of rail (2) is tensioned longitudinally with the force $N_7$ determined by the relationship:

$$0,1 \leq \frac{N_7}{N_8} \leq 0,9,$$

where $N_8$ is the longitudinal tensile strength of head (3).

24. Linear transport system according to claim 1, characterized in that it is provided with an additional rail (2) forming with said rail (2) a single rail track (43).

25. Linear transport system according to claim 24, characterized in that both rails (2) are arranged horizontally in respect to each other.

26. Linear transport system according to claim 24, characterized in that both rails (2) are arranged vertically in respect to each other.

27. Linear transport system according to claim 24, characterized in that rail track (43) is provided with a third rail (2).

28. Linear transport system according to claim 27, characterized in that three rails (2) in cross section are arranged relative one to another along a straight line.

29. Linear transport system according to claim 27, characterized in that three rails (2) in cross section are arranged relative one to another in a triangle with the base facing down.

30. Linear transport system according to claim 27, characterized in that three rails (2) in cross section are arranged relative one to another in a triangle with the vertex facing down.

31. Linear transport system according to claim 27, characterized in that rail track (43) is provided with a fourth rail (2).

32. Linear transport system according to claim 31, characterized in that four rails (2) in cross section are arranged relative one to another along a straight line.

33. Linear transport system according to claim 31, characterized in that four rails (2) in cross section are arranged relative one to another in a quadrangle with one side facing down.

34. Linear transport system according to claim 31, characterized in that four rails (2) in cross section are arranged relative one to another in a quadrangle with the vertex of one angle facing down.

35. Linear transport system according to claim 1, characterized in that the head (3) of rail (2) is current-conductive.

36. Linear transport system according to claim 35, characterized in that the head (3) of rail (2) is connected to a source (24a) of direct electric current.

37. Linear transport system according to claim 35, characterized in that the head (3) of rail (2) is connected to a source (24a) of alternating electric current.

38. Linear transport system according to claim 35, characterized in that rail (2) is joined to support (8, 9) through electrical insulator (26).

39. Linear transport system according to claims 24 or 27, characterized in that rails (2) are joined together by lateral plates (14) spaced at distances $l_1$ determined by the relationship:

$$1 \le \frac{l_1}{l_2} \le 100,$$

where $l_2$ is the distance between the rails.

40. Linear transport system according to claim 39, characterized in that lateral plate (14) is shaped into a semi-ring.

41. Linear transport system according to claim 39, characterized in that lateral plate (14) is ring-shaped.

42. Linear transport system according to claim 39, characterized in that it is provided with an electrical insulator (20) placed at the link of lateral plate (14) with rail (2) to separate the individual rails (2) of rail track (43) from each other.

43. Linear transport system according to claim 39, characterized in that it is provided with a damper (21) placed at the link of rail (2) with lateral plate (14).

44. Linear transport system according to claim 1, characterized in that movable support (9) is rigidly joined to base (1), and rail track (43) is joined to rigid support (8) through a mechanism (29) of mutual relative longitudinal displacement.

45. Linear transport system according to claims 1 or 24, characterized in that rail (2) and/or track (43) are joined to support (8, 9) through mechanism (28) for adjusting its position relative to base (1).

46. Linear transport system according to claims 1 or 24, characterized in that rail (2) and/or track (43) are joined to support (8, 9) through a damper (26).

47. Linear transport system according to claim 39, characterized in that at least one lateral plate (14) is joined to adjacent supports (8, 9) by connecting rod (30) arranged at an angle to rail track (43).

48. Linear transport system according to claim 47, characterized in that connecting rod (30) is joined to the lateral plate (14) through damper (31).

49. Linear transport system according to claim 1, characterized in that each string (7) is rigidly joined to rigid support (8a).

50. Linear transport system according to claim 1, characterized in that each rail (2) is rigidly joined to rigid support (8b).

51. Linear transport system according to claim 50, characterized in that the means for rigid joining of rail (2) to rigid support (8b) is provided with a gap to accomodate rail switch (36) along the line of traffic along rail (2).

52. Linear transport system according to claims 1 or 24, characterized in that rail track (43) is arranged inside a tube (40).

53. Linear transport system according to claim 52, characterized in that tube (40a) is placed in water, anchored on the bottom by means of anchors (41) and provided with floating bodies (42).

54. Linear transport system according to claims 52 or 53, characterized in that tube (40) is tensioned longitudinally with the force $N_9$ determined by the relationship:

$$01 \le \frac{N_9}{N_{10}} \le 0,999,$$

where $N_{10}$ is the longitudinal tensile strength of tube (40).

55. Linear transport system according to claim 53, characterized in that tube (40a) has its cross sectional centre of gravity shifted downwards.

56. Linear transport system according to claims 1 or 24, characterized in that it includes at least one additional rail track (43a) that is arranged under main rail track (43), the lateral plates (14) of rail tracks (43, 43a) being joined together.

57. Linear transport system according to claim 56, characterized in that lateral plates (14) of rail tracks are joined together trough a damper (44).

58. Linear transport system according to claim 1, characterized in that vehicle (4) has at least two wheels (5) contacting one rail (2).

59. Linear transport system according to claim 24, characterized in that vehicle (4) has at least three wheels (5, 5c) contacting at least two rails (2).

60. Linear transport system according to claim 1, characterized in that drive (6) of vehicle (4) is a torque motor (6a) with the transmission of rotation to at least one wheel (5).

61. Linear transport system according to claim 1, characterized in that the drive (6) of vehicle (4) is at least one motor-wheel (6b).

62. Linear transport system according to claim 1, characterized in that the drive (6) of vehicle (4) is a linear electric motor (6c).

63. Linear transport system according to claim 1, characterized in that the drive (6) of vehicle (4) is a propeller (6d).

64. Linear transport system according to claim 1, characterized in that the drive (6) of vehicle (4) is a gas turbine.

**Statement under Art. 19.1 PCT**

The amendments of the claims are due to the document (Canadian patent No. 1126576 of 29 June 1982, B61B 5/02) found by the International Search Authority (ISA/RU), which document describes the technical task that is nearest to the proposed invention with regard to the technical principle.

More concretely, the amendments consist in splitting claim 1 (as it had been filed) into four new claims.

As these amendmends of the claims must be fully based on the description of the invention, the description may be amended in the parts that relate to the prior art and the main features of the proposed invention.

Fig. 1

Fig. 2

Fig. 3

Fig. 4

A

Fig. 5

Fig. 6

Fig. 7

Fig. 8

Fig. 9

Fig. 10a   Fig. 10b   Fig. 10c

Fig. 11a   FIg. 11b   Fig. 11c   Fig. 11d

Fig. 12a   Fig. 12b   Fig. 12c   FIg. 12d

Fig. 13a    Fig. 13b    Fig. 13c    Fig. 13d    Fig. 13e

Fig. 14a    Fig. 14b    Fig. 14c    Fig. 14d

Fig. 15        Fig. 16

Fig. 17a  Fig. 17b  Fig. 17c  Fig. 17d  Fig. 17e

D

Fig. 18

Fig. 19

Fig. 20

Fig 21

Fig. 22

Fig. 23

Fig. 24 a

Fig. 24 b

Fig. 25a

Fig. 25b

Fig. 26a

Fig. 26b

Fig. 26c

Fig. 26d

Fig. 26e

Fig. 26f

Fig. 26g

Fig. 27a

Fig. 27b

Fig. 27c

Fig. 27d

Fig.28

Fig.29a    Fig.29b    Fig.29c    Fig.29d

## INTERNATIONAL SEARCH REPORT

| International application No. |
|---|
| PCT/IB94/00065 |

**A. CLASSIFICATION OF SUBJECT MATTER**

    IPC5 : B61B 13/04, E01B 5/08, E01B 25/00

According to International Patent Classification (IPC) or to both national classification and IPC

**B. FIELDS SEARCHED**

Minimum documentation searched (classification system followed by classification symbols)
    IPC5 : B61B 5/00,5/02,13/02,13/04,13/08; E01B 5/00, E01B 5/06,5/08,5/10,5/12, 25/00,25/08,25/10,25/12,25/16,E01B 25/18,25/22,25/24; E21F 13/00; B65G 23/44

Documentation searched other than minimum documentation to the extent that such documents are included in the fields searched

Electronic data base consulted during the international search (name of data base and. where practicable. search terms used)

**C. DOCUMENTS CONSIDERED TO BE RELEVANT**

| Category* | Citation of document, with indication, where appropriate, of the relevant passages | Relevant to claim No. |
|---|---|---|
| A | CA, A, 1126576 (Parazader S.) , 29 June 1982 (29.06.82), P. 6, lines 11-25 P. 9, lines 23-28, P.10, lines 1-15, fig. 1,3 | 1-61 |
| A | SU, A, 1106707 (V.E.Pavlov et al), 7 August 1984 (07.08.84), coI. 1, lines 28-45, fig. 1 | 1 |
| A | US, A, 4211171 (R. Baltensperger), 8 July 1980 (08:07.80), col. 2, lines 64-68, col. 3, abstract, fig. 1,2,3 | 1 |
| A | US, A, 5009168 (Gerber Garment Technology, Inc.), 23 April 1991 (23.04.91), col. 1, lines 42-57, col. 3, line 57, col. 4, line 66, fig. 3,4,5 | 1 |
| A | US, A, 4208969 (R.Baltensperger et al), 24 June 1980 (24.06.80), abstract fig, 1,2,3, col. 2, lines 5-52, col. 3, lines 30-35, col. 4, line 60, col. 5, line 8 | 1 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance: the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance: the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 16 June 1994 (16.06.94) | 12 July 1994 (12.07.94) |

| Name and mailing address of the ISA/ RU | Authorized officer |
|---|---|
| | |
| Facsimile No. | Telephone No. |

Form PCT/ISA/210 (second sheet) (July 1992)

**INTERNATIONAL SEARCH REPORT**

International application No.

PCT/IB94/00065

| C (Continuation). DOCUMENTS CONSIDERED TO BE RELEVANT | | |
|---|---|---|
| Category* | Citation of document, with indication, where appropriate, of the relevant passages | Relevant to claim No. |
| A | DE, B2, 2427721 (Aérail Société d'Etudes et de Représentations Industrielles Mécaniques et Métallurgi-ques-S.E.R.I.M.M.,Malakoff (France), 11 November 1976 (11.11.76), col. 1 lines 4-26, fig. 1,2 | 1 |
| A | FR, A1, 2581098 (MASCHINENFABRIK SCHARF GmbH.), 31 October 1986 831.10.86), abstract, fig. 1,2 | 1 |
| A | V.G. Aleksandrov et al"Spravochnik po aviatsionnym materialam i tekhnologii ikh primenenia",1979,Moskva, "Transport", pp. 33-36, pp. 52-53, dwg. 2,4, p. 158, dwg. 7.1 | 1,10,19,20, 51 |

Form PCT/ISA/210 (continuation of second sheet) (July 1992)